# EUROPÄISCHE PATENTSCHRIFT

(11) **EP 2 350 177 B1**
(45) Veröffentlichungstag und Bekanntmachung des Hinweises auf die Patenterteilung: **23.01.2013**
(21) Anmeldenummer: 09740074.1
(22) Anmeldetag: 23.09.2009
(51) Int. Cl.: C08J 9/00, C08L 63/00

(54) **EPOXID-BASIERTER STRUKTURSCHAUM MIT VERBESSERTER ZÄHIGKEIT**
EPOXIDE-BASED STRUCTURAL FOAM HAVING IMPROVED TENACITY
MOUSSE STRUCTURÉE À BASE D'ÉPOXY PRÉSENTANT UNE TÉNACITÉ AMÉLIORÉE

(30) Priorität: 28.10.2008 DE 102008053518
(43) Veröffentlichungstag der Anmeldung: 03.08.2011
(73) Patentinhaber: Henkel AG & Co. KGaA, 40589 Düsseldorf (DE)
(72) Erfinder: BARRIAU, Emilie, 40597 Düsseldorf (DE); LAMMERSCHOP, Olaf, Danville CA 94506 (US); ENGELS, Thomas, 40591 Düsseldorf (DE); MÜNZ, Xaver, 69117 Heidelberg (DE)
(86) Internationale Anmeldenummer: PCT/EP2009/062310
(87) Internationale Veröffentlichungsnummer: WO 2010/049220

(56) Entgegenhaltungen:
- EP-A1- 1 867 676
- WO-A1-98/52997
- DE-A1- 19 909 270
- US-A- 4 258 137
- US-A- 5 274 006
- US-A1- 2004 131 840
- US-A1- 2004 266 899
- US-A1- 2008 188 609

## Beschreibung

Die vorliegende Erfindung betrifft schäum- und härtbare Epoxidharz-Mischungen, die in aufgeschäumtem und ausgehärtetem Zustand als Strukturschäume zum Aussteifen von insbesondere metallischen Hohlstrukturen verwendet werden können. Die Massen enthalten eine Kombination von thermoplastischen Polyurethanen und BlockCopolymeren, was zu einem optimierten Eigenschaftsprofil hinsichtlich Verarbeitbarkeit in nicht ausgehärtetem Zustand und mechanischen Eigenschaften nach Aushärtung führt.

Leichtbauteile für eine konstant maßhaltige Serienfertigung mit hoher Steifigkeit und Strukturfestigkeit werden für viele Anwendungsfelder benötigt. Insbesondere im Fahrzeugbau ist wegen der dort gewünschten Gewichtsersparnis ein hoher Bedarf für Leichtbauteile aus dünnwandigen Strukturen, die trotzdem ausreichende Steifigkeit und Strukturfestigkeit besitzen. Ein Weg zur Erzielung hoher Steifigkeit und Strukturfestigkeit bei möglichst niedrigem Gewicht des Bauteils benutzt Hohlteile, die aus verhältnismäßig dünnem Blech oder Kunststoffplatten gefertigt sind. Dünnwandige Bleche neigen jedoch zur leichten Deformation. Daher ist es bereits seit einiger Zeit bekannt, bei Hohlkörperstrukturen diesen Hohlraum mit einem Strukturschaum auszuschäumen, wodurch einerseits die Deformation oder Verformung verhindert oder minimiert wird und andererseits Festigkeit und Steifigkeit dieser Teile erhöht werden.

Üblicherweise sind derartige geschäumte Verstärkungs- und Versteifungsmittel entweder Metallschäume oder sie enthalten ein thermisch härtbares Harz oder Bindemittel wie z.B. Epoxidharze. Diese Zusammensetzungen enthalten in der Regel ein Treibmittel, Füllstoffe und verstärkende Füllstoffe wie z.B. Mikrohohlkugeln aus Glas. Vorzugsweise haben solche Schäume im aufgeschäumten und ausgehärteten Zustand eine Dichte von 0,3 bis 0,7 g/cm³. Diese Schäume sollen nach der Aushärtung Temperaturen von mehr als 130°C, vorzugsweise mehr als 150°C zumindest kurzfristig schadlos überstehen. Derartige schäumbare, thermisch härtbare Zusammensetzungen enthalten in der Regel weitere Bestandteile wie Härtungsagenzien, Prozesshilfsmittel, Stabilisatoren, Farbstoffe oder Pigmente, gegebenenfalls UV-Absorber sowie haftungsverstärkende Bestandteile.

Die WO 96/37400 beschreibt ein W-förmiges Verstärkungsgebilde, das ein thermisch expandierbares, harzartiges Material enthält und vor der Aushärtung in den zu verstärkenden Hohlkörper eingebracht wird. Die verstärkende polymere Matrix besteht vorzugsweise aus einem einkomponentigen, teigartigen System enthaltend ein Epoxidharz, einen Acrylnitril-Butadienkautschuk, Füllstoffe, hochfeste Glaskugeln, einen Härter sowie einen Beschleuniger und ein Treibmittel auf der Basis einer Azo-Verbindung oder einer Hydrazid-Verbindung.

In der WO 00/27920 werden expandierbare Abdichtungs- und Dämpfungszusammensetzungen offenbart, die Mischungen von einem thermoplastischem Harz bzw. mehreren thermoplastischen Harzen und einem Epoxidharz sind. Diese sollen spritzgießbar sein und ein leichtes Gewicht besitzen und eine hohe Druckfestigkeit aufweisen. Als Beispiele thermoplastischer Harze werden genannt: Festkautschuke wie Styrol-Butadien-Kautschuke und Nitril-Butadien-Kautschuke oder Polystyrol-Polymere wie beispielsweise SBS-Blockcopolymere. Das Epoxidharz ist vorzugsweise flüssig.

WO 01/92415 offenbart thermisch gehärtete Massen mit verbesserter Schlagzähigkeit, die Methylmethacrylat-haltige Block-Copolymere enthalten. Weiterhin können Partikel mit Kern-Schale-Struktur vorhanden sein. Die hier offenbarten Materialien enthalten jedoch kein Treibmittel, d.h. sie sind nicht auf eine Verwendung als Strukturschaum hin optimiert.

Die deutsche Patentanmeldung DE 102006048739 beschreibt Bindemittel zur Herstellung expandierbarer, thermisch härtbarer Formkörper, die
mindestens ein Epoxidharz,
mindestens einen bei Raumtemperatur festen Polyester,
mindestens ein Treibmittel,
mindestens einen Härter und
mindestens einen Füllstoff enthalten.

Zusätzlich können "Flexibilisierungsmittel" enthalten sein. Als Flexibilisierungsmittel werden beispielsweise Festkautschuke genannt. Beispiele für geeignete Festkautschuke sind Polybutadien, Styrol-Butadien-Kautschuk, Butadien-Acrylnitril-Kautschuk, EPDM, synthetischer oder natürlicher Isoprenkautschuk, Butylkautschuk oder Polyurethankautschuk. Besonders geeignet sind teilvernetzte Festkautschuke auf der Basis von Isopren-Acrylnitril- oder Butadien-Acrylnitril-Copolymeren.

WO 2007/004184 beschreibt ein thermisch aufschäumbares Material, das die folgenden Komponenten enthält:
a) ein festes Epoxidharz, das im Wesentlichen frei ist vom flüssigem oder halbfestem Epoxidharz,
b) einen Schlagzähigkeits-Verbesserer,
c) einen Härter und
d) ein Hitze-aktivierbares Treibmittel

Dabei kann der Schlagzähigkeits-Verbesserer ein thermoplastisches Material darstellen. Beispielsweise werden genannt: Epoxy-Polyurethan-Hybride und Isocyanat-Prepolymere (beispielsweise Isocyanat-terminierte Polyetherpolyole), die eine Molmasse im Bereich zwischen 1000 und 10000 g/mol aufweisen. Weiterhin werden eine Reihe von Block-Copolymere als Schlagzähigkeits-Verbesserer genannt. Diese können eine Ke-Schale-Struktur aufweisen.

WO 2007/025007 offenbart eine Zusammensetzung mit folgenden Komponenten:
a) zumindest ein Epoxidharz,
b) Kautschuk-Partikel mit einer Kern-Schale-Struktur,
c) einen weiteren Schlagzähigkeits-Modifizierer bzw. Zähigkeits-Verbesserer und
d) einen Hitze-aktivierbaren latenten Härter.

Zusätzliche kann die Zusammensetzung Treibmittel enthalten, so dass sie als Strukturschaum verwendet werden kann. Als Komponenten c) werden beispielsweise Polyurethane genannt, die sich von Hydroxyl-terminierten Polyoxyalkylenen, wie beispielsweise Polypropylenglycol oder Polytetrahydrofurandiol ableiten. Diese sollten thermoplastisches Verhalten zeigen. Statt dessen oder zusätzlich hierzu können auch Block-Copolymere vorhanden sein, beispielsweise solche, bei denen zumindest ein Polymerblock eine Glastemperatur unterhalb von 20°C (vorzugsweise unterhalb 0°C oder unterhalb -30°C oder unterhalb -50°C) aufweist, beispielsweise ein Polybutadienblock oder ein Polyisoprenblock. Zumindest ein weiterer Block des Block-Copolymers hat eine Glastemperatur oberhalb von 20°C (vorzugsweise oberhalb 50°C oder oberhalb 70°C), beispielsweise ein Polystyrolblock oder ein Polymethylmethacrylatblock. Als konkrete Beispiele genannt werden: Styrol-Butadien-Methylmethacrylat-Block-Copolymere, Methylmethacrylat-Butadien-Methylmethacrylat-Block-Copolymere und Butadien-Methylmethacrylat-Block-Copolymere.

Dreidimensionale Teile aus Strukturschäumen werden heute üblicherweise im Spritzgussverfahren hergestellt. Aufgrund der Klebrigkeit der Materialen bei Temperaturen oberhalb von 30°C kann das Ausgangsmaterial zur Teileherstellung durch das Spritzgussverfahren nicht als Granulat eingesetzt werden. Um dennoch Teile nach diesem Verfahren herstellen zu können, muss die Materialzuführung zur Spritzgussmaschine kostspielig modifiziert werden. Es ist eine spezielle Zuführung erforderlich und damit ist es nicht möglich, die Teileherstellung auf beliebigen handelsüblichen Spritzgussmaschinen durchzuführen.

Werden Formulierungen mit höherem Schmelzpunkt eingesetzt, um den Erweichungspunkt auf ca. 40°C zu erhöhen, muss das Strukturschaum-Teil in der Spritzgussmaschine bei höheren Temperaturen verarbeitet werden, um die Formen zu füllen. Temperaturen über 100 °C sind nicht zulässig, da sonst die Aushärtereaktion der Zusammensetzung angestoßen wird und dies zur Blockade der Maschine führen kann.

Bedingt durch die hohe Viskosität bei Temperaturen knapp oberhalb des Schmelzpunkts der Epoxidharze und besonders durch die Klebrigkeit der verflüssigten Epoxidharze ist die Herstellung von Spritzgussteilen nur sehr schlecht und unter erheblichem technischem Aufwand möglich. Dies macht meist Sonderausstattungen an den Verarbeitungsmaschinen erforderlich und erhöht damit die Investitionskosten.

Durch die innere Klebrigkeit der Schmelzgussmasse wird das Fließverhalten in der Spritzgussmaschine und den Spritzgussformen stark verschlechtert. Die Klebrigkeit der warmen Spritzgussmasse auf Basis von Epoxidharzen kann zu einer Verschmutzung der Anlagen führen und hierdurch Wartungs- und Reinigungskosten deutlich erhöhen. Zur Abhilfe können Trennmittel eingesetzt werden. Dies kann jedoch zu einer Korrosion an Werkzeugen und Maschinen führen, was wiederum den Wartungsbedarf erhöht.

Die vorliegende Erfindung stellt sich die Aufgabe, Spritzgussmassen auf Basis von Epoxidharzen zur Verfügung zu stellen, bei denen die vorstehend genannten Probleme nicht oder in deutlich verringerten Ausmaß auftreten. Gleichzeitig sollen die mechanischen Eigenschaften der ausgehärteten Masse auch bei Temperaturen < 0 °C verbessert werden, insbesondere Kompressionswiderstand, Kompressionsstärke, Kompressionsstauchung und Modulus

Die vorliegende Erfindung betrifft eine thermisch expandier- und härtbare Masse enthaltend
a) mindestens ein Epoxid-Prepolymer,
b) mindestens einen hitzeaktivierbaren Härter für das Prepolymer,
c) mindestens ein Treibmittel,
d) mindestens ein thermoplastisches Polyurethan
e) mindestens ein Block-Copolymer.

Zusätzlich kann die Masse als Komponente
f) Kautschuk-Partikel
enthalten. Diese tragen dazu bei, die Schlagzähigkeit der ausgehärteten Masse zu verbessern, insbesondere bei Temperaturen unterhalb von 0°C. Vorzugsweise weisen diese Kautschuk-Partikel eine Kern-Schale-Struktur auf.

Dabei ist es bevorzugt, dass die Kautsdhuk-Partikei mit Kern-Schale-Struktur einen Kern aus einem Polymermaterial mit einer Glasübergangstemperatur von unterhalb 0 °C und eine Hülle aus einem Polymermaterial mit einer Glasübergangstemperatur von oberhalb 25 °C aufweisen. Besonders geeignete Kautschuk-Partikel mit Kern-Schale-Struktur können einen Kern aus einem Dien-Homopolymer, einem Dien-Copolymer oder einem Polysiloxan-Elastomer und/oder eine Schale aus einem Alkyl(meth)acrylat-Homopolymer oder -Copolymer aufweisen.

Beispielsweise kann der Kern dieser Kern-Schale-Partikel ein Dienhomopolymer oder Copolymer enthalten, das ausgewählt sein kann aus einem Homopolymer von Butadien oder Isopren, einem Copolymer von Butadien oder Isopren mit einem oder mehreren ethylenisch ungesättigten Monomeren, wie beispielsweise vinylaromatische Monomere; (Meth)acrylnitril, (Meth)acrylaten oder ähnlichen Monomeren. Das Polymer oder Copolymer der Schale kann als Monomere beispielsweise enthalten: (Meth)acrylate, wie insbesondere Methylmethacrylat, vinylaromatische Monomere (beispielsweise Styrol), Vinylcyanide (beispielsweise Acrylnitril), ungesättigte Säuren oder Anhydride (beispielsweise Acrylsäure), (Meth)acrylamide und ähnliche Monomere, die zu Polymeren mit einer geeigneten hohen Glastemperatur führen.

Das Polymer oder Copolymer der Schale kann Säuregruppen aufweisen, die durch Metallcarboxylat-Bildung vernetzen können, beispielsweise durch Salzbildung mit zweiwertigen Metallkationen. Weiterhin kann das Polymer oder Copolymer der Schale covalent vernetzt sein, indem man Monomere einsetzt, die zwei oder mehr Doppelbindungen pro Molekül aufweisen.

Als Kern können andere kautschukartige Polymere verwendet werden, wie beispielsweise Polybutylacrylat oder Polysiloxanelastomere, wie beispielsweise Polydimethylsiloxan, insbesondere vernetztes Polydimethylsiloxan.

Typischerweise sind diese Kerne-Schale-Partikel so aufgebaut, dass der Kern 50 bis 95 Gew.-% des Kerne-Schale-Partikels und die Schale 5 bis 50 Gew.-% dieses Partikels ausmachen.

Vorzugsweise sind diese Kautschukpartikel relativ klein. Beispielsweise kann die durchschnittliche Teilchengröße (wie beispielsweise durch Lichtstreumethoden bestimmbar) im Bereich von etwa 0,03 bis etwa 2 µm, insbesondere im Bereich von etwa 0,05 bis etwa 1 µm liegen. Kleinere Kerne-Schale-Partikel können jedoch ebenfalls verwendet werden, beispielsweise solche, deren mittlerer Durchmesser kleiner als etwa 500 nm, insbesondere kleiner als etwa 200 nm ist. Beispielsweise kann die durchschnittliche Teilchengröße im Bereich von etwa 25 bis etwa 200 nm liegen.

Die Herstellung derartiger Kerne-Schale-Partikel ist im Stand der Technik bekannt, wie beispielsweise in WO 2007/025007 auf Seite 6, Zeilen 16 bis 21 angegeben ist. Kommerzielle Bezugsquellen derartiger Kerne-Schale-Partikel werden in diesem Dokument im letzten Absatz der Seite 6 bis zum ersten Absatz der Seite 7 aufgeführt. Auf diese Bezugsquellen wird hiermit verwiesen. Weiterhin wird auf Herstellverfahren für solche Partikel verwiesen, die in dem genannten Dokument von Seite 7, 2. Absatz bis Seite 8, 1. Absatz beschrieben sind. Für nähere Informationen zu geeigneten Kerne-Schale-Partikel wird ebenfalls auf das genannte Dokument WO 2007/025007 verwiesen, das von Seite 8, Zeilen 15 bis Seite 13, Zeile 15 ausführliche Informationen hierzu enthält.

Die selbe Funktion wie die vorstehend genannten Kautschuk-Partikel mit Kern-Schale-Struktur können anorganische Partikel übernehmen, die eine Hülle aus organischen Polymeren aufweisen. Daher ist eine weitere bevorzugte Ausführungsform der vorliegenden Erfindung dadurch gekennzeichnet, dass die erfindungsgemäße Masse als zusätzliche Komponente
g) anorganische Partikel
enthält, die eine Hülle aus organischen Polymeren aufweisen.

In dieser Ausführungsform enthält die erfindungsgemäße Masse vorzugsweise anorganische Partikel, die eine Hülle aus organischen Polymeren aufweisen, wobei die organischen Polymere ausgewählt sind aus Homo- oder Copolymeren von Acrylsäure- und/oder Methacrylsäureester und zu mindestens 30 Gew.-% aus einpolymersiertem Acrylsäure- und/oder Methacrylsäureester bestehen.

Die Acrylsäure- und/oder Methacrylsäureester stellen vorzugsweise Methyl- und/oder Ethylester dar, wobei besonders bevorzugt mindestens ein Anteil der Ester als Methylester vorliegt. Zusätzlich können die Polymere auch unveresterte Acryl- und/oder Methacrylsäure enthalten, was die Anbindung der organischen Polymere an die Oberfläche der anorganischen Partikel verbessern kann. Daher ist es in diesem Fall besonders bevorzugt, wenn die Monomereinheiten aus unveresterter Acryl- und/oder Methacylsäure (nahe) an demjenigen Ende der Polymerkette liegen, das sich an die Oberfläche der anorganischen Partikel bindet.

Dabei ist es bevorzugt, dass die organischen Polymere zu mindestens 80 Gew.-% aus Acrylsäure- und/oder Methacrylsäureester bestehen. Insbesondere können sie zu 90 Gew.-%, 95 Gew-% oder vollständig hieraus bestehen. Sofern die organischen Polymere andere Monomere als diese Acrylsäure- und/oder Methacrylsäureester bzw. unveresterte Acrylsäure- und/oder Methacrylsäure enthalten, sind diese vorzugsweise ausgewählt aus Comonomeren, die Epoxy-Hydroxy- und/oder Carboxyl-Gruppen aufweisen.

Die organischen Polymere der Hülle sind vorzugsweise unvernetzt oder so schwach vernetzt, dass nicht mehr als 5 % an Monomer-Einheiten einer Kette mit Monomer-Einheiten einer anderen Kette vernetzt sind. Dabei kann es vorteilhaft sein, dass die Polymere in der Nähe der Oberfläche der anorganischen Partikel stärker vernetzt sind als weiter außen in der Hülle. Insbesondere ist die Hülle vorzugsweise so aufgebaut, dass mindestens 80 %, insbesondere mindestens 90 % und besonders bevorzugt mindestens 95 % der Polymerketten mit einem Ende an die Oberfläche der anorganischen Partikel angebunden sind.

Die anorganischen Partikel weisen vor dem Aufbringen der Hülle aus organischen Polymeren vorzugsweise eine mittlere Teilchengröße im Bereich von 1 bis 1000, insbesondere im Bereich von 5 bis 30 nm auf. Bekanntermaßen ist die Teilchengröße durch Lichtstreumethoden sowie elektronenmikroskopisch bestimmbar.

Die Hülle aus organischen Polymeren weist eine geringere Dichte auf als die anorganischen Partikel selbst. Vorzugsweise hat die Hülle aus organischen Polymeren eine solche Dicke, dass das Gewichtsverhältnis des anorganischen Kerns zur Hülle aus organischen Polymeren im Bereich von 2 : 1 bis 1 : 5, vorzugsweise im Bereich von 3 : 2 bis 1 : 3 liegt. Dies ist durch die Wahl der Reaktionsbedingungen beim Aufwachsen der Hülle aus organischen Polymeren auf die anorganischen Partikel steuerbar.

Allgemein können die anorganischen Partikel ausgewählt sein aus Metallen, Oxiden, Hydroxiden, Carbonaten, Sulfaten und Phosphaten. Dabei können auch Mischformen aus Oxiden, Hydroxiden und Carbonaten, wie beispielsweise basische Carbonate oder basische Oxide vorliegen. Wählt man anorganische Partikel aus Metallen, so kommen vorzugsweise Eisen, Cobalt, Nickel oder Legierungen in Betracht, die zumindest 50 Gew.-% aus einem dieser Metalle bestehen. Oxide, Hydroxide oder Mischformen hiervon sind vorzugsweise ausgewählt aus solchen von Silicium, Cer, Cobalt, Chrom, Nickel, Zink, Titan, Eisen, Yttrium, Zirkonium und/oder Aluminium. Auch hiervon sind Mischformen möglich, wie beispielsweise Partikel aus Alumosilikaten oder aus silikatischen Gläsern. Besonders bevorzugt sind Zinkoxid, Aluminiumoxide oder -hydroxide sowie SiO₂ bzw. die als "Kieselsäure" oder angelsächsisch als "silica" bezeichneten Oxidformen des Siliciums. Weiterhin können die anorganischen Partikel aus Carbonaten, wie beispielsweise Calciumcarbonat, oder aus Sulfaten, wie beispielsweise Bariumsulfat, bestehen. Selbstverständlich ist es auch möglich, dass Partikel mit unterschiedlich zusammengesetzten anorganischen Kernen nebeneinander vorliegen.

Zur Herstellung der anorganischen Partikel, die eine Hülle aus organischen Polymeren aufweisen, kann man beispielsweise so verfahren, wie es in der WO 2004/111136 A1 am Beispiel der Belegung von Zinkoxid mit Alkylenethercarbonsäuren beschrieben ist. Gemäß dieser Verfahrensweise suspendiert man die unbehandelten anorganischen Partikel in einem unpolaren oder wenig polaren Lösungsmittel, gibt danach monomere oder präpolymere Bestandteile der Hülle zu, entfernt das Lösungsmittel und startet die Polymerisation, beispielsweise radikalisch oder fotochemisch. Weiterhin kann man analog der in EP 1 469 020 A1 beschriebenen Herstellungsweise verfahren, wobei man als organische Beschichtungskomponente für die Partikel Monomere oder Prepolymere des Hüllmaterials einsetzt. Weiterhin ist eine Herstellung der umhüllten Partikel durch "atom transfer radical polymerization" möglich, wie es beispielhaft für die Polymerisation von n-Butylacrylat auf Kieselsäure-Nanopartikel beschrieben wurde in: G. Carrot, S. Diamanti, M. Manuszak, B. Charleux, J.-P. Vairon: "Atom Transfer Radical Polymerization of n-Butyl Acrylate from Silica Nanoparticles", J. Polym. Sci., Part A: Polymer Chemistry, Vol. 39, 4294-4301 (2001).

Weiterhin kann auf Herstellverfahren zurückgegriffen werden, wie sie in der WO 2006/053640 beschrieben sind. Für die vorliegende Erfindung sind dabei anorganische Kerne auszuwählen, wie sie in WO 2006/053640 von Seite 5, Zeile 24, bis Seite 7, Zeile 15, mit ihren Herstellverfahren beschrieben sind. Die Beschichtung dieser Kerne erfolgt analog wie in diesem Dokument von S. 10, Zeile 22, bis S 15, Zeile 7 beschrieben. Dabei kann auch dem Vorschlag dieses Dokuments gefolgt werden (Seite 15, Zeilen 9 bis 24), die anorganischen Kerne vor der Aufpolymerisation des Mantels einer Vorbehandlung zu unterziehen. Hierzu heißt es an der genannten Stelle:

"Insbesondere beim Einsatz anorganischer Kerne kann es auch bevorzugt sein, dass der Kern vor der Aufpolymerisation des Mantels einer Vorbehandlung unterzogen wird, die ein Anbinden des Mantels ermöglicht. Dies kann üblicherweise in einer chemischen Funktionalisierung der Partikeloberfläche bestehen, wie sie für die verschiedensten anorganischen Materialen aus der Literatur bekannt ist. Insbesondere bevorzugt kann es dabei sein, auf der Oberfläche solche chemischen Funktionen zu anzubringen, die als reaktives Kettenende eine Aufpfropfung der Mantelpolymere ermöglichen. Hier sind als Beispiele insbesondere endständige Doppelbindungen, Epoxy-Funktionen, sowie polykondensierbare Gruppen zu nennen. Die Funktionalisierung von Hydroxygruppen-tragenden Oberflächen mit Polymeren ist beispielsweise aus EP-A-337 144 bekannt".

Die Epoxid-Prepolymere, im folgenden auch als "Epoxidharze" bezeichnet, können grundsätzlich gesättigte, ungesättigte, cyclische oder acyclische, aliphatische, alicyclische, aromatische oder heterocyclische Polyepoxidverbindungen sein.

Geeignete Epoxidharze im Rahmen der vorliegenden Erfindung sind beispielsweise vorzugsweise ausgewählt aus Epoxidharzen vom Bisphenol-A-Typ, Epoxidharzen vom Bisphenol-S-Typ, Epoxidharzen vom Bisphenol-F-Typ, Epoxidharzen vom Phenol-Novolak-Typ, Epoxidharzen vom Cresol-Novolak-Typ, epoxidierten Produkten zahlreicher Dicyclopentadien-modifizierter Phenolharze, erhältlich durch Umsetzung von Dicyclopentadien mit zahlreichen Phenolen, epoxidierte Produkte von 2,2',6,6'-Tetramethylbiphenol, aromatische Epoxidharze wie Epoxidharze mit Naphthalin-Grundgerüst und Epoxidharze mit Fluoren-Grundgerüst, aliphatische Epoxidharze wie Neopentylglykoldiglycidylether und 1,6-Hexandioldiglycidylether, alicyclische Epoxidharze wie 3,4-Epoxycyclohexylmethyl-3,4-epoxycyclohexancarboxylat und Bis(3,4-epoxycyclohexyl)adipat, und Epoxidharze mit einem Heteroring wie Triglycidylisocyanurat. Insbesondere umfassen die Epoxidharze zum Beispiel das Reaktionsprodukt aus Bisphenol A und Epichlorhydrin, das Reaktionsprodukt aus Phenol und Formaldehyd (Novolak-Harze) und Epichlorhydrin, Glycidyl Ester sowie das Reaktionsprodukt aus Epichlorhydrin und p-Aminophenol.

Weitere Polyphenole, die durch Umsetzung mit Epichlorhydrin (oder Epibromhydrin) geeignete Epoxidharz-Prepolymere liefern, sind: Resorcin, 1,2-Dihydroxybenzol, Hydrochinon, bis(4-hdroxyphenyl)-1,1-isobutan, 4,4'-dihydroxybenzophenon, bis(4-hydroxyphenyl)-1,1-ethan und 1,5-hydroxynaphthalin.

Weitere geeignete Epoxid-Prepolymere sind Polyglycidylether von Polyalkoholen oder Diaminen. Solche Polyglyzidylether leiten sich ab von Polyalkoholen, wie beispielsweise Ethylenglycol, Diethylenglycol, Triethylenglycol, 1,2-Propylenglycol, 1,4-Butylenglycol, Triethylenglycol, 1,5-Pentandiol, 1,6-Hexandiol oder Trimethylolpropan.

Weitere bevorzugte Epoxidharze, die kommerziell erhältlich sind, umfassen insbesondere Octadecylenoxid, Epichlorhydrin, Styroloxid, Vinylcyclohexenoxid, Glycidol, Glycidylmethacrylat, Diglycidylether von Bisphenol A (z.B. diejenigen, welche unter den Handelsbezeichnungen "Epon 828", "Epon 825", "Epon 1004" und "Epon 1010" der Hexion Specialty Chemicals Inc., "DER-331", "DER-332", "DER-334", "DER-732" und "DER 736" der Dow Chemical Co. erhältlich sind), Vinylcyclohexendioxid, 3,4-Epoxycyclohexylmethyl-3,4-epoxycyclohexen-carboxylat, 3,4-Epoxy-6-methylcyclohexylmethyl-3,4-epoxy-6-methyl-cyclohexencarboxylat, Bis(3,4-epoxy-6-methylcyclohexylmethyl)adipat, Bis(2,3-epoxy-cyclopentyl)ether, aliphatisches, mit Polypropylenglycol modifiziertes Epoxid, Dipentendioxid, epoxidiertes Polybutadien (z.B. Krasol Produkte von Sartomer), Epoxidfunktionalität enthaltendes Siliconharz, flammhemmende Epoxidharze (z.B. "DER-580", ein bromiertes Epoxidharz vom Bisphenol-Typ, welches von Dow Chemical Co. erhaeltlich ist), 1,4-Butandioldiglycidylether eines Phenolformaldehyd-Novolaks (z.B. "DEN-431" und "DEN-438" der Dow Chemical Co.), sowie Resorcin-diglycidylether (z.B. "Kopoxite" der Koppers Company Inc.), Bis(3,4-epoxycyclohexyl)adipat, 2-(3,4-Epoxycyclohexyl-5,5-spiro-3,4-epoxy)cyclohexan-meta-dioxan, Vinylcyclohexenmonoxid, 1,2-Epoxyhexadecan, Alkylglycidilether wie z.B. C8-C10-Alkyl-glycidylether (z.B. "HELOXY Modifier 7" der Hexion Specialty Chemicals Inc.), C12-C14-Alkyl-glycidylether (z.B. "HELOXY Modifier 8" der Hexion Specialty Chemicals Inc.), Butylglycidylether (z.B. "HELOXY Modifier 61" der Hexion Specialty Chemicals Inc.), Cresylglycidylether (z.B. "HELOXY Modifier 62" der Hexion Specialty Chemicals Inc.), p-tert.-Butylphenyl-glycidylether (z.B. "HELOXY Modifier 65" der Hexion Specialty Chemicals Inc.), polyfunktionelle Glycidylether wie z.B. Diglycidylether von 1,4-Butandiol (z.B. "HELOXY Modifier 67" der Hexion Specialty Chemicals Inc.), Diglycidylether von Neopentylglycol (z.B. "HELOXY Modifier 68" der Hexion Specialty Chemicals Inc.), Diglycidylether von Cyclohexandimethanol (z.B. "HELOXY Modifier 107" der Hexion Specialty Chemicals Inc.), Trimethylolethantriglycidilether (z.B. "HELOXY Modifier 44" der Hexion Specialty Chemicals Inc.), Trimethylolpropan-triglycidylether (z.B. "HELOXY Modifier 48" der Hexion Specialty Chemicals Inc.), Polyglycidylether eines aliphatischen Polyols (z.B. "HELOXY Modifier 84" der Hexion Specialty Chemicals Inc.), Polyglycoldiepoxid (z.B. "HELOXY Modifier 32" der Hexion Specialty Chemicals Inc.), Bisphenol F-Epoxide (z.B. "EPN-1138" oder GY-281" der Huntsman Int. LLC), 9,9-Bis-4-(2,3-epoxypropoxy)-phenylfluorenon (z.B. "Epon 1079" der Hexion Specialty Chemicals Inc.).

Weitere bevorzugte kommerziell erhältliche Verbindungen sind z. B. ausgewählt aus Araldite^{™} 6010, Araldit^{™} GY-281^{™}, Araldit^{™} ECN-1273, Araldit^{™} ECN-1280, Araldit^{™} MY-720, RD-2 von der Huntsman Int. LLC; DEN^{™} 432, DEN^{™} 438, DEN^{™} 485 von Dow Chemical Co., Epon^{™} 812, 826, 830, 834, 836, 871, 872,1001, 1031 etc. von Hexion Specialty Chemicals Inc. und HPT^{™} 1071, HPT^{™} 1079 ebenfalls von Hexion Specialty Chemicals Inc., als Novolak-Harze weiterhin beispielsweise Epi-Rez^{™} 5132 von Hexion Specialty Chemicals Inc., ESCN-001 von Sumitomo Chemical, Quatrex 5010 von Dow Chemical Co., RE 305S von Nippon Kayaku, Epiclon^{™} N673 von DaiNipon Ink Chemistry oder Epicote^{™} 152 von Hexion Specialty Chemicals Inc.

Weiterhin können die folgenden Polyepoxide zumindest anteilig mit verwendet werden: Polyglycidylester von Polycarbonsäuren, beispielsweise Umsetzungsprodukte von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Das Epoxid-Äquivalent geeigneter Polyepoxide kann zwischen 150 und 50000, vorzugsweise zwischen 170 und 5000, variieren. Beispielsweise ist ein Epoxidharz auf Basis Epichlorhydrin/Bisphenol-A geeignet, das ein Epoxid-Äquivalentgewicht von 475 bis 550 g/eq bzw. einen Epoxidgruppen-Gehalt im Bereich von 1820 bis 2110 mmol/g aufweist. Der nach RPM 108-C bestimmte Erweichungspunkt liegt im Bereich von 75 bis 85°C.

Dabei kann die thermisch expandier- und härtbare Masse mindestens ein Epoxid-Prepolymer a) enthalten, das bei Raumtemperatur (22°C) flüssig ist. Dies erleichtert die Verarbeitung der Masse im Spritzguss. Üblicherweise führt die Anwesenheit eines solchen bei Raumtemperatur flüssigen Epoxid-Prepolymers zu einer unerwünschten Klebrigkeit. Diese wird jedoch durch das erfindungsgemäß anwesende thermoplastische Polyurethan d) so weit wieder abgesenkt, dass die Masse im Spritzgussverfahren gut verarbeitbar ist.

Als bei Raumtemperatur flüssige Epoxid-Prepolymere werden vorzugsweise Reaktionsprodukte von Epichlorhydrin mit Bisphenol A oder Bisphenol F eingesetzt. Typischerweise haben diese Epoxid-Äquivalentgewichte im Bereich von etwa 150 bis etwa 480.

Als Härter werden thermisch aktivierbare oder latente Härter für das Epoxidharz-Bindemittelsystem eingesetzt. Diese können ausgewählt werden aus den folgenden Verbindungen: Guanidine, substituierte Guanidine, substituierte Harnstoffe, Melaminharze, Guanamin-Derivate, cyclische tertiäre Amine, aromatische Amine und/oder deren Mischungen. Dabei können die Härter sowohl stöchiometrisch mit in die Härtungsreaktion einbezogen sein, sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanoguanidin (Dicyandiamid). Als Vertreter für geeignete Guanamin-Derivate seien alkylierte Benzoguanamin-Harze, Benzoguanamin-Harze oder Methoximethyl-ethoxymethylbenzoguanamin genannt. Bevorzugt ist Dicyandiamid geeignet.

Zusätzlich zu oder anstelle von den vorgenannten Härtern können katalytisch wirksame substituierte Harnstoffe eingesetzt werden. Dies sind insbesondere der p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden. Weiterhin können diverse, vorzugsweise feste Imidazolderivate als katalytisch wirksame Beschleuniger eingesetzt werden. Stellvertretend genannt seien 2-Ethyl-2-methylimidazol, N-Butylimidazol, Benzimidazol sowie N-C₁ bis C₁₂-Alkylimidazole oder N-Arylimidazole. Weiterhin eigenen sich Addukte von Aminoverbindungen an Epoxidharze als beschleunigende Zusätze zu den vorgenannten Härtern. Geeignete Aminoverbindungen sind tertiäre aliphatische, aromatische oder cyclische Amine. Geeignete Epoxyverbindungen sind beispielsweise Polyepoxide auf Basis von Glycidylethern des Bisphenols A oder F oder des Resorcins. Konkrete Beispiele für solche Addukte sind Addukte von tertiären Aminen wie 2-Dimethylaminoethanol, N-substituierte Piperazine, N-substituierte Homopiperazine, N-substituierte Aminophenole an Di- oder Polyglycidylether des Bisphenols A oder F oder des Resorcins.

Als Treibmittel eignen sich im Prinzip alle bekannten Treibmittel wie z.B. die "chemischen Treibmittel" die durch Zersetzung Gase freisetzen, oder "physikalische Treibmittel", d.h. expandierende Hohlkugeln. Beispiele für die erstgenannten Treibmittel sind Azobisisobutyronitril, Azodicarbonamid, Di-Nitrosopentamethylentetramin 4,4'-Oxybis-(benzolsulfonsäurehydrazid), Diphenylsulfon-3,3'-disulfohydrazid, Benzol-1,3-disulfohydrazid, p-Toluolsulfonylsemicarbazid. Besonders bevorzugt werden die expandierbaren Kunststoffmikrohohlkugetn auf der Basis von Polyvinylidenchloridcopolymeren oder Acrylnitril/(Meth)acrylat-Copolymeren. Diese sind z.B. unter dem Namen "Dualite®" bzw. "Expancel®" von den Firmen Pierce & Stevens bzw. Casco Nobel im Handel erhältlich.

Die Menge an Treibmittel wählt man vorzugsweise so, dass sich das Volumen der Masse beim Erwärmen auf Aktivierungstemperatur (oder Expansionstemperatur) um mindestens 10: %, vorzugsweise mindestens 20 % und insbesondere mindestens 50 % irreversibel : `vergrößert: Hierunter ist zu verstehen, dass die Masse zusätzlich zur normalen und reversiblen thermischen Ausdehnung gemäß ihrem thermischen Ausdehnungskoeffizienten ihr Volumen im Vergleich zum Ausgangsvolumen bei Raumtemperatur (22. °C) beim Erwärmen auf die Aktivierungstemperatur irreversibel derart vergrößert, dass es nach dem Wiederabkühlen auf Raumtemperatur um mindestens 10 %, vorzugsweise um mindestens 20 % und insbesondere mindestens 50 % größer ist als zuvor. Der angegebene Expansionsgrad bezieht sich also auf das Volumen der Masse bei Raumtemperatur vor und nach dem vorübergehenden Erhitzen auf die Aktivierungstemperatur. Die Obergrenze des Expansionsgrads, also der irreversiblen Volumenvergößerung, kann man durch die Wahl der Menge des Treibmittels so einstellen, dass sie unter 300 %, insbesondere unter 200 % liegt.

Die Aktivierungstemperatur liegt vorzugsweise im Bereich von 120 bis 220 °C. Diese Temperatur soll vorzugsweise für eine Zeitdauer im Bereich von 10 bis 150 Minuten aufrecht erhalten werden.

Als Komponente d) enthält die erfindungsgemäße Masse ein thermoplastisches Polyurethan. Der Begriff "thermoplastisches Polyurethan", häufig abgekürzt als "TPU", ist dem Fachmann auf dem hier betroffenen Gebiet bekannt. Ein TPU ist ein zumindest im Wesentlichen lineares Polymer, das durch die Polymerisationsreaktion dreier Ausgangskomponenten gebildet wird:
1. ein Diisocyanat
2. ein kurzkettiges Diol (häufig als "Kettenverlängerer bezeichnet) der allgemeinen Formen (OH-R-OH), wobei R für einen Kohlenwasserstoff-Rest mit 1 bis 4 C-Atomen steht,
3. ein langkettiges Diol (OH-Z-OH), wobei die Gruppe Z für eine Polymerkette steht, die zu einem so genannten Weichsegment des entstandenen Polyurethans führt. Beispielsweise kann die Gruppe Z eine Polyether- oder Polyesterkette darstellen. Polyetherketten können durch ringöffnende Polymerisation von Alkylenoxiden, wie beispielsweise Ethylenoxid oder Propylenoxid oder durch eine entsprechende Reaktion gesättigter sauerstoffhaltiger Heterozyklen, wie beispielsweise Tetrahydrofuran gebildet, werden. Polyesterketten entstehen durch Reaktion zweiwertiger Alkohole mit zweibasischen Carbonsäuren. Eine bevorzugte Polyesterkette besteht aus Polycaprolacton-Polyester.

Bei der Umsetzung dieser drei Komponenten entstehe ein Polyurethan, das abwechselnd Weichsegmente und Hartsegmente enthält. Die Weichsegmente werden dabei durch die Gruppe Z gebildet. Die Hartsegmente entstehen aus dem Diisocyanat und dem kurzkettigen Diol.

Die Polarität der Hartsegmente führt zu einer starken Anziehung zwischen diesen, was wiederum zu einem hohen Aggregations- und Ordnungsgrad in der Festphase des Polymers führt. So entstehen Kristalline oder Pseudo-Kristallinbereiche, die in der weichen und flexiblen Matrix der Weichsegmente eingebettet sind. Die Kristallinen und Pseudo-Kristallinbereiche der Hartsegmente wirken als physikalische Verknüpfung, was dem TPU eine hohe Elastizität verleiht. Die flexiblen Ketten der Weichsegmente tragen zum Dehnungsverhalten des Polymers bei.

Das thermoplastische Polyurethan d) ist vorzugsweise ausgewählt aus solchen Polyurethanen, die eine Polyesterkette enthalten und die keine reaktiven Gruppen, insbesondere keine Isocyanatgruppen aufweisen.

Dabei werden thermoplastische Polyurethane bevorzugt, die bei Raumtemperatur (22°C) fest sind und eine Glastemperatur unterhalb von -20°C, vorzugsweise unterhalb von - 30°C haben. Weiterhin weist das bei Raumtemperatur vorzugsweise feste thermoplastische Polyurethan d) einen Schmelzbereich oder einen Erweichungsbereich nach Kofler auf, der oberhalb von 100°C, vorzugsweise oberhalb von 115°C beginnt.

Geeignete bei Raumtemperatur vorzugsweise feste Polyurethane d) zeichnen sich weiterhin dadurch aus, dass sie als reine Substanz eine Bruchdehnung von mindestens 300%, vorzugsweise von mindestens 400% aufweisen.

Die zahlenmittlere Molmasse geeigneter Polyurethane d), wie sie durch Gelpermeationschromatographie bestimmbar ist, liegt vorzugsweise im Bereich von 40000 g/mol bis 120000 g/mol, insbesondere im Bereich von 50000 g/mol bis 90000 g/mol.

Polyester-basierte thermoplastische Polyurethane mit den vorstehend genannten Eigenschaften sind besonders dafür geeignet, einerseits die erwünschte geringe Klebrigkeit der erfindungsgemäßen Massen und damit deren einfachere Verarbeitung durch Spritzguss zu bewirken und andererseits die erforderliche mechanische Stabilität der ausgehärteten Masse zu gewährleisten. Dabei werden Massen, die im ausgehärtetem Zustand einen E-Modul von mindestens 900 MPa sowie einen Kompressionswiderstand von mindestens 15 MPa aufweisen, als geeignet angesehen, während Massen mit darunter liegenden Werten für den vorgesehenen Verwendungszweck als weniger geeignet angesehen werden. Die Kompressionsstauchung, also die Verformbarkeit unter Druck bis zum Zerbrechen, sollte mindestens 20 % betragen.

Als thermoplastische Polyurethane d) mit den vorstehend genannten Eigenschaften sind insbesondere solche geeignet, die eine Polycaprolacton-Polyesterkette enthalten.

Geeignete thermoplastische Polyurethane, die den vorstehenden Kriterien genügen, sind im Handel erhältlich und können anhand dieser Spezifikationen beispielsweise von der Fa. Merquinsa in Spanien oder der Fa. Danquinsa GmbH in Deutschland bezogen werden.

Erfindungsgemäß enthält die Masse als zusätzliche Komponente e) mindestens ein Block-Copolymer. Dieses wird vorzugsweise ausgewählt aus solchen, die einen ersten Polymerblock mit einer Glasübergangstemperatur von unterhalb 15°C, insbesondere von unterhalb 0°C, und einen zweiten Polymerblock mit einer Glasübergangstemperatur von oberhalb 25°C, insbesondere von oberhalb 50°C enthalten. Weiterhin sind solche Block-Copolymere geeignet, die ausgewählt sind aus solchen, bei denen ein erster Polymerblock ausgewählt ist aus einem Polybutadien- oder Polyisoprenblock und ein zweiter Polymerblock ausgewählt ist aus einem Polystyrol- oder einem Polymethylmethacrylat-Block.

Beispielsweise wird das Block-Copolymer (e) ausgewählt aus Copolymeren mit folgendem Blockaufbau: Styrol-Butadien-(Meth)Acrylat, Styrol-Butadien-(Meth)Acrylsäureester, Ethylen-(Meth)Acrylsäureester-Glycidyl(meth)acrylsäureester, Ethylen-(Meth)Acrylsäureester-Maleinsäureanhydrid, (Meth)Acrylsäureester- Butylacrylat-(Meth)Acrylsäureester, vorzugsweise Methylmethacrylat-Butylacrylat-Methylmethacrylat

Die vorstehend genannten Block-Copolymere entsprechen denjenigen, die auch im Rahmen der eingangs zitierten WO 2007/025007 eingesetzt werden können. Nähere Ausführungen hierzu und weitere auch im Rahmen der vorliegenden Erfindung geeignete Block-Copolymere können diesem Dokument von S. 25, Z. 21 bis S. 26, Z. 9 entnommen werden. Dort finden sich auch Querverweise auf Dokumente, in denen die Herstellung solcher Block-Copolymere beschrieben ist.

Vorstehend wird die Zusammensetzung dieser Block-Copolymere dadurch definiert, dass für jeden Block die Monomer-Einheit angegeben ist. Dies ist so zu verstehen, dass das Block-Copolymer jeweils Polymerblöcke aus den genannten Monomeren enthält. Dabei können bei den einzelnen Polymerblöcken bis zu 20 mol/% der genannten Monomere durch andere Co-Monomere ersetzt werden. Insbesondere gilt dies für Blöcke aus PolyMethylmethacrylat.

Die genannten Block-Copolymere verbessern die Schlagzähigkeit der ausgehärteten erfindungsgemäßen Massen, insbesondere bei Temperaturen unterhalb von 0°C.

In der Regel enthalten die erfindungsgemäß einsetzbaren Stoffgemische weiterhin an sich bekannte Füllstoffe wie zum Beispiel die diversen gemahlenen oder gefällten Kreiden, Ruß, Calcium-Magnesiumcarbonate, Talkum, Schwerspat sowie insbesondere silikatische Füllstoffe vom Typ des Aluminium-Magnesium-Calcium-Silicats, z. B. Wollastonit, Chlorit. Vorzugsweise können Glimmer-haltige Füllstoffe mit verwendet werden, ganz besonders bevorzugt ist hier ein so genannter 2- Komponentenfüllstoff aus Muskovit-Glimmer und Quarz mit niedrigem Schwermetallgehalt.

Zur Gewichtsreduzierung kann das Stoffgemisch zusätzlich zu den vorgenannten "normalen" Füllstoffen sog. Leichtfüllstoffe enthalten. Diese können ausgewählt werden aus der Gruppe der Metallhohlkugeln wie z. B. Stahlhohlkugeln, Glashohlkugeln, Flugasche (Fillite), Kunststoffhohlkugeln auf der Basis von Phenolharzen, Epoxidharzen oder Polyestern, expandierte Microhohlkugeln mit Wandmaterial aus (Meth)acrylsäureester-Copolymeren, Polystyrol, Styrol(meth)acrylat-Copolymeren sowie insbesondere aus Polyvinylidenchlorid sowie Copolymeren des Vinylidenchlorids mit Acrylnitril und/oder (Meth)acrylsäureestern, keramische Hohlkugeln oder organische Leichtfüllstoffe natürlichen Ursprungs wie gemahlene Nussschalen, beispielsweise die Schalen von Cashewnüssen, Kokosnüssen oder Erdnussschalen sowie Korkmehl oder Kokspulver. Besonders bevorzugt werden dabei solche Leichtfüllstoffe auf der Basis von Mikrohohlkugeln, die in der ausgehärteten Formkörpermatrix eine hohe Druckfestigkeit des Formkörpers gewährleisten.

In einer besonders bevorzugten Ausführungsform enthalten die thermisch härtbaren Massen zusätzlich Fasern, beispielsweise auf der Basis von Aramidfasern, Kohlenstoff-Fasern, Metallfasern - z.B. aus Aluminium-, Glasfasern, Polyamidfasern, Polyethylenfasern oder Polyesterfasern, wobei diese Fasern vorzugsweise Pulpfasern oder Stapelfasern sind, die eine Faserlänge zwischen 0,5 und 6 mm haben und einen Durchmesser von 5 bis 20 µm. Besonders bevorzugt sind hierbei Polyamidfasern vom Typ der Aramidfaser oder auch Polyesterfasern.

Weiterhin können die erfindungsgemäßen härtbaren Massen gängige weitere Hilfs- und Zusatzmittel wie z. B. Weichmacher, Rheologie-Hilfsmittel, Netzmittel, Haftvermittler, Alterungsschutzmittel, Stabilisatoren und/oder Farbpigmente enthalten. Je nach Anforderungsprofil in Bezug auf Verarbeitungseigenschaften, die Flexibilität, die geforderte Versteifungswirkung sowie der klebende Verbund zu den Substraten können die Mengenverhältnisse der Einzelkomponenten in verhältnismäßig weiten Grenzen variieren. Gegebenenfalls können die erfindungsgemäßen Massen Reaktivverdünner zum Einstellen des Fließverhaltens enthalten. Reaktive Verdünner im Sinne dieser Erfindung sind Epoxigruppen enthaltende, niederviskose Substanzen (Glycidylether oder Glycidylester) mit aliphatischer oder aromatischer Struktur. Typische Beispiele für Reaktivverdünner sind Mono-, Di- oder TriglycidyliBther von C₆- bis C₁₄-Monoalkoholen oder Alkylphenolen sowie die Monoglycidylether des Cashewnuss-Schalenöls, Diglycidylether des Ethylenglycols, Diethylenglycols, Triethylenglycols, Tetraethylenglycols; Propylenglycols, Dipropylenglycols, Tripropylenglycols, Tetrapropylenglycols, 1,4-Butylenglycols, 1,5-Pentandiols, 1,6-Hexandiols. Cyclohexandimethanols, Triglycidylether des Trimethylolpropans sowie die Glycidylester von C₆- bis C₂₄- Carbonsäuren oder deren Mischungen.

Typische Bereiche für die wesentlichen Komponenten sind, angegeben in Gew.-% bezogen auf die gesamte Masse:
a) Epoxid-Prepolymer: 10 - 65 %, vorzugsweise 20 - 60 %
b) hitzeaktivierbarer Härter für das Prepolymer: 1 bis 10%, vorzugsweise 2 - 8%
c) Treibmittel: 0,5 bis 10 %; vorzugsweise 1 bis 5 %
d) thermoplastisches Polyurethan: 1 bis 50 %, vorzugsweise 5 bis 35 %,
   insbesondere 10 - 20 %
e) Block-Copolymer: 1 - 50, vorzugsweise 5 bis 30 %
f) Kautschuk-Partikel 0 - 40 %, vorzugsweise mindestens 5 und höchstens 25 %
g) anorganische Partikel, die eine Hülle aus organischen Polymeren aufweisen: 0 - 40 %, vorzugsweise mindestens 5 und höchstens 25 %
h) Füllstoffe 0 - 50 %, vorzugsweise mindestens 5 und höchstens 30 %,
wobei die Summe der Gesamtbestandteile 100 Gew.% ergibt.

Die erfindungsgemäßen Zusammensetzungen lassen sich leicht in Granulatform herstellen und können so leicht in herkömmlichen Containern. Big Bags, Fässern oder Säcken zwischengelagert und transportiert werden. Sie können in konventionellen Spritzgießanlagen ohne spezielle Vorrats-Dosier und Fördereinrichtungen weiterverarbeitet werden. Die aus diesen Zusammensetzungen herstellbaren Strukturschäume haben vergleichbar gute Eigenschaften bei Druck- oder Biegebelastung wie die bisher bekannten Zusammensetzungen auf Basis von Epoxiden.

Überraschenderweise zeigen die erfindungsgemäßen Zusammensetzungen trotz gutem Fliessverhalten in der Spritzguss-Maschine im Fertigungsablauf des Rohbaus bei der Fahrzeugherstellung in den Reinigungs- und Vorbehandlungsbädern bei 65°C und gleichzeitiger Strömungsbelastung kein Ablaufen oder Auswaschen. Außerdem ist in keine Klebrigkeit der Formkörper oder Granulate bei Temperaturen unter 45°C festzustellen.

Vorzugsweise werden aus den expandierbaren, thermisch härtbaren Zusammensetzungen im Spritzgussverfahren bei niedrigen Drücken und niedrigen Temperaturen thermisch expandierbare Formkörper hergestellt, die zum Versteifen und/oder Verstärken von metallischen Bauteilen verwendet werden können.

Beispielsweise kann man hierzu das Stoffgemisch mit Hilfe eines Extruders bei einer Temperatur im Bereich von 50 bis 100°C durch eine Matrize extrudieren und nach Abkühlen auf eine Temperatur unterhalb von 50°C in Stücke schneiden. Bei der Extrusion durch eine entsprechend geformte Matrize und Abschneiden auf die erwünschte Länge können so Formkörper hergestellt werden, deren Form an den zu versteifenden Hohlraum angepasst ist. Auf diese Weise erhält man beispielsweise einen Formkörper aus einer reaktiven, vernetzenden und bei einer Temperatur im Bereich von 120 bis 220°C um mindestens 20 % expandierbaren Masse.

Als Alternative hierzu wählt man ein Verfahren zur Herstellung von Formkörper aus einem Stoffgemisch wie vorstehend beschrieben, wobei man das Stoffgemisch mit Hilfe eines Extruders bei einer Temperatur im Bereich von 50 bis 100°C in eine Spritzgussform einbringt und nach Abkühlen auf eine Temperatur unterhalb von 50°C entformt.

Dabei kann man für die Extrusion von einem Stoffgemisch ausgehen, das als vorgemischte, aber ungeformte Masse in den Extruder eingespeist oder das erst im Extruder selbst aus den einzelnen Rohstoffen zusammengemischt wird. Es ist jedoch auch möglich, das Stoffgemisch in Form des vorstehend beschriebenen Granulates einzusetzen. Dieses wird dann vor dem Eintragen in den Extruder oder vorzugsweise im Extruder selbst aufgeschmolzen und in diesem Zustand in die Spritzgussform gepresst.

Diese Verfahrensvariante ist gekennzeichnet, durch die folgenden wesentlichen Verfahrensschritte:
a) Mischen der zuvor beschriebenen Zusammensetzungs-Bestandteile bei Temperaturen unterhalb von 100°C, vorzugsweise zwischen 80 und 95°C
b) Extrusion der Zusammensetzung bei Temperaturen unterhalb von 100 °C, vorzugsweise 80°C bis 95°C, unter Granulatbildung ggf. auf ein gekühltes Metallband;
c) Abkühlen des so geformten Granulates,
d) ggf. Zwischenlagerung des Granulats, vorzugsweise in Containern, Big Bags, Fässern oder Säcken,
e) Förderung des Granulates in eine Spritzguss-Maschine,
f) Aufschmelzen des Granulates bei Temperaturen unterhalb von 100°C und Injektion der Schmelze in die vorbestimmte Form der Spritzguss-Maschine,
g) Abkühlen des gebildeten Formkörpers und Entnahme des Formkörpers aus der Form.

Durch den Gehalt des oder der thermoplastischen Polyurethane d) verringert sich die Klebrigkeit der Epoxidharz-haltigen Masse soweit, dass für den Extrusions- bzw. Spritzgussprozess kein Trennmittel eingesetzt werden muss.

Weiterhin umfasst die vorliegende Erfindung einen extrudierten oder spritzgegossenen Formkörper bestehend aus einer thermisch expandier- und härtbaren Masse gemäß vorstehender Beschreibung.

Die Hauptanwendung der erfindungsgemäßen Formkörper ist die Versteifung und die Verstärkung von Bauteilen, insbesondere Bauteilen für weiße Ware oder von Karosserlebautellen wie Karosserierahmen, Türen, Kofferraumdeckel; Motorhauben und /oder Dachteilen im Automobilbau. Daher umfasst die vorliegende Erfindung auch ein Fahrzeug oder metallisches Bauteil, das mit mindestens einem der vorstehend beschriebenen, durch Extrusion oder durch Spritzguss erhaltenen, Formkörper versteift oder verstärkt wurde

Insbesondere umfasst die vorliegende Erfindung ein Verfahren zur Verstärkung, Dämmung, Dämpfung und/oder Abdichtung von Hohlbauteilen, wobei man einen erfindungsgemäß erhaltenen Formkörper vor der Fertigstellung des Hohlbauteils an einer Innenwand des Hohlbauteils befestigt, das Hohlbauteil schließt und auf eine Temperatur im Bereich von 120 bis 220°C erwärmt, vorzugsweise für eine Zeitdauer im Bereich von 10 bis 150 Minuten.

Für dieses Verfahren macht man sich den üblichen Produktionsprozess für langgestreckte Hohlstrukturen im Fahrzeugbau, beispielsweise für den Rahmen, der die Fahrgastzelle umgibt, zunutze. Diese Hohlstrukturen werden üblicherweise so gefertigt, dass man zwei entsprechend geformte Halbschalen aus Metall herstellt und diese Halbschalen zu der hohlen Rahmenstruktur bzw. eines Teils hiervon zusammenfügt. Solche Hohlstrukturen oder Hohlträger sind beispielsweise die A-, B- oder C-Säule einer Automobilkarosserie, die die Dachstruktur tragen, oder auch Dachholme, Schweller sowie Teile der Radhäuser oder Motorträger. Wie beim Einsetzen von so genannten "pillar filler" oder "baffles" in derartige Hohlstrukturen im Stand der Technik üblich, kann der erfindungsgemäß erhaltene Formkörper mit Hilfe eines Befestigungselements oder eines klebrigen Oberflächenabschnitts an der später zur Innenwand des Hohlraums werdenden Oberfläche der einen Halbschale befestigt werden, bevor man diese mit der anderen Halbschale zur Ausbildung der Hohlstruktur zusammenfügt.

Dabei ist der erfindungsgemäß erhaltene Formkörper vorzugsweise so geformt, dass sein senkrecht zur Längsachse gesehener Querschnitt der Querschnittsform des Hohlraums entspricht. Der Formkörper ist jedoch so dimensioniert, dass es vor dem Aufschäumen nur an einer oder wenigen Stellen mit der Innenwand des Hohlteils Kontakt hat. Von diesen Stellen abgesehen verbleibt zwischen den parallel zur Längsachse des Formkörpers liegenden Begrenzungsflächen und den Innenwänden des Hohlteils ein Flutspalt einer Breite von etwa 1 bis etwa 10 mm, vorzugsweise von etwa 2 bis etwa 4 mm. Dieser Flutspalt gewährleistet, dass die diversen Prozessflüssigkeiten, mit denen die Rohbaukarosserie behandelt wird, alle Teile der Innenseiten der Hohlraumwände benetzen können. Der Flutspalt schließt sich erst bei der thermischen Expansion des Formkörpers, wodurch dieser seine Zweckerfüllung der Verstärkung, Dämmung, Dämpfung und/oder Abdichtung der Hohlbauteile erreicht. Abstandshalter an den Formkörpern können gewährleisten, dass dieser Flutspalt vor dem Aufschäumen des Formkörpers zuverlässig entsteht und bis zum Aufschäumen erhalten bleibt.

Ausführungsbeispiele (Gew.-% bezogen auf die Gesamt-Zusammensetzung):

| | | A | B | C | D |
|---|---|---|---|---|---|
| 1 | Bei 22 °C halbfestes Epoxidharz | 5% | 11,2% | 16% | 12% |
| 2 | Bei 22 °C festes Epoxidharz | 10% | 28,2% | 18,8% | 20% |
| 3 | Bei 22 °C flüssiges Epoxidharz | 20% | 9,4% | - | - |
| 4 | Kem-Schale Partikel (Epoxidharz/Butadien-Acryl-Copolymer) | 15% | - | 18,8% | 20% |
| 5 | Block-Copolymer (Polystyrol-Polybutadien-Polymethylmethacrylat) (Bezugsquelle: AKEMA) | 5% | 4,7% | 6,1% | 10% |
| 6 | Thermoplastisches Polyurethan (TPU-1 ^{*)} | 10% | 4,7% | - | - |
| 7 | Thermoplastisches Polyurethan (TPU-2^{*)} | - | - | 9,4% | 5% |
| 8 | Calciumcarbonat | 10,15% | 10% | 9,4% | 10% |
| 9 | Glaskugeln | 15% | 24,5% | 14,1% | 15% |
| 10 | Dicyandiamid | 4,50% | 2,9% | 3,1% | 3,2% |
| 11 | Beschleuniger (Ajicure AH 300, ein Fenuron-Derivat | 2,25% | 1,4% | 1,5% | 1,6% |
| 12 | physikalisches Treibmittel (Expancel 091 DU 140, Akzo Nobel) | 1,80% | 1,7% | 1,7% | 1,8% |
| 13 | pyrolytische Kieselsäure | 1% | 1% | 0,9% | 1% |
| 14 | Ruß | 0,3% | 0,3% | 0,2% | 0,4% |
| | *Total* | *100%* | *100%* | *100%* | *100%* |

| | | | | | |
|---|---|---|---|---|---|
| ^{*)} TPU-1 = Polyester-basiertes Polyurethan, zahlenmittlere Molmasse 62.150 +/-100, Schmelzbereich nach Kofler 155 bis 165 °C, Zugfestigkeit nach DIN 53.504: 35 MPa, Bruchdehnung nach DIN 53.504: 420 %, Glasübergangstemperatur (DSC, 10°C pro Minute): -22°C. | | | | | |

TPU-2 = Polyester-basiertes Polyurethan, Schmelzbereich nach Kofler 135 bis 145 °C, Zugfestigkeit nach DIN 53.504: 30 MPa, Bruchdehnung nach DIN 53.504: 500 %, Glasübergangstemperatur (DSC, 10°C pro Minute): -27°C.

Diese Komponenten wurden auf folgende Weise miteinander vermischt: Komponenten 6 und 7 wurden bei 120 °C in einem Planetenmischer in die vorgelegten Komponenten 1 bis 5 eingearbeitet. Danach wurde die Mischung auf 80 °C abgekühlt, die Komponenten 8, 9, 13 und 14 dazugegeben und für 30 Minuten vermischt. Abschließend wurden Komponenten 10 bis 12 zugegeben und für 10 Minuten eingemischt. Danach wurde die Mischung für 5 Minuten evakuiert.

Aus erfindungsgemäßen, nicht oder wenig klebrigen Mischungen konnten mit folgenden Verfahrensparametern Spritzgussteile hergestellt werden: Temperatur 20 bis 80 °C, Dosiergeschwindigkeit: 15 m/min., Rückdruck: 5 bar, Dosiervolumen: 8 cm³, Injektionsdruck: 350 bar.

Nach Aufschäumen und Aushärten bei 150 °C hatten die Massen folgende Eigenschaften:

| | A | B | C | D |
|---|---|---|---|---|
| Dichte vor Härtung [g/cm³] | 0,9 | 0,74 | 0,9 | 0,9 |
| Expansionsgrad [%] | 89% | 97% | 54% | 78% |
| Dichte nach Härtung [g/cm³] | 0,5 | 0,4 | 0,6 | 0,5 |
| Zugscherfestigkeit* [MPa] | 3,9 | 3,8 | 1,8 | - |
| Druckfestigkeit** [MPa] | 25 | 15 | 18 | 20 |
| Druckmodul** [MPa] | 1070 | 900 | 915 | 660 |

| | | | | |
|---|---|---|---|---|
| * Zugscherfestigkeit ermittelt auf beöltem kaltgewalztem Stahl (1,5mm), Schaumdicke 2mm: 10mm/min bei Raumtemperatur ** Druckfestigkeit und Druckmodul ermittelt mit Zylinder (33mm Durchmesser und 66mm Länge): 12mm/Minute bei Raumtemperatur | | | | |

## Patentansprüche

1. Thermisch expandier- und härtbare Masse enthaltend
a) mindestens ein Epoxid-Prepolymer,
b) mindestens einen hitzeaktivierbaren Härter für das Präpolymer,
c) mindestens ein Treibmittel,
d) mindestens ein thermoplastisches Polyurethan,
e) mindestens ein Block-Copolymer.

2. Thermisch expandier- und härtbare Masse nach Anspruch 1, **dadurch gekennzeichnet, dass** sie zusätzlich Kautschuk-Partikel enthält.

3. Thermisch expandier- und härtbare Masse nach Anspruch 2, **dadurch gekennzeichnet, dass** die Kautschuk-Partikel eine Kern-Schale-Struktur aufweisen.

4. Thermisch expandier- und härtbare Masse nach Anspruch 1, **dadurch gekennzeichnet, dass** sie zusätzlich anorganische Partikel enthält, die eine Hülle aus organischen Polymeren aufweisen.

5. Thermisch expandier- und härtbare Masse nach einem der Ansprüche 1 bis 4, **dadurch gekennzeichnet, dass** als Komponenten d) ein thermoplastisches nicht reaktives Polyurethan verwendet wird, das ausgewählt ist aus Polyurethanen, die eine Polyester-Kette enthalten.

6. Thermisch expandier- und härtbare Masse nach Anspruch 5, **dadurch gekennzeichnet, dass** das thermoplastische Polyurethan d) bei 22 °C fest ist und eine Glastemperatur unterhalb von -20 °C, vorzugsweise unterhalb von -30 °C aufweist

7. Thermisch expandier- und härtbare Masse nach mindestens einem der Ansprüche 5 und 6, **dadurch gekennzeichnet, dass** das thermoplastische Polyurethan d) bei 22 °C fest ist und einen Schmelzbereich oder einen Erweichungsbereich nach Kofler aufweist, der oberhalb von 100 °C, vorzugsweise oberhalb von 115 °C beginnt.

8. Thermisch expandier- und härtbare Masse nach einem oder mehreren der Ansprüche 5 bis 7, **dadurch gekennzeichnet, dass** das thermoplastische Polyurethan d) bei 22 °C fest ist und als reine Substanz eine Bruchdehnung von mindestens 300 %, vorzugsweise von mindestens 400 % aufweist.

9. Thermisch expandier- und härtbare Masse nach einem oder mehreren der Ansprüche 5 bis 8, **dadurch gekennzeichnet, dass** das thermoplastische Polyurethan d) eine zahlenmittlere Molmasse im Bereich 50000 g/mol bis 120000 g/mol aufweist.

10. Thermisch expandier- und härtbare Masse nach einem der Ansprüche 1 bis 9, **dadurch gekennzeichnet, dass** das Block-Copolymer (e) ausgewählt ist aus solchen, die einen ersten Polymerblock mit einer Glasübergangstemperatur von unterhalb 15 °C und einen zweiten Polymerblock mit einer Glasübergangstemperatur von oberhalb 25 °C enthalten.

11. Thermisch expandier- und härtbare Masse nach Anspruch 10, **dadurch gekennzeichnet, dass** das Block-Copolymer (e) ausgewählt ist aus solchen, bei denen ein erster Polymerblock ausgewählt ist aus einem Polybutadien- oder Polyisoprenblock und ein zweiter Polymerblock ausgewählt ist aus einem Polystyrol- oder einem Polymethylmethacrylat-Block.

12. Thermisch expandier- und härtbare Masse nach einem der Ansprüche 1 bis 10, **dadurch gekennzeichnet, dass** das Block-Copolymer (e) ausgewählt ist aus Copolymeren mit folgendem Blockaufbau: Styrol-Butadien-(Meth)Acrylat, Styrol-Butadien-(Meth)Acrylsäureester, Ethylen-(Meth)Acrylsäureester-Glycidyl(meth)acrylsäureester, Ethylen-(Meth)Acrylsäureester-Maleinsäureanhydrid, Methylmethacrylat-Butylacrylat-Methylmethacrylat.

13. Thermisch expandier- und härtbare Masse nach einem der Ansprüche 1 bis 12, **dadurch gekennzeichnet, dass** sie zusätzlich einen oder mehrere Füllstoffe enthält, ausgewählt aus der Gruppe umfassend: Fasern, mineralische Füllstoffen und Leichtfüllstoffe.

14. Thermisch expandier- und härtbare Masse nach einem der Ansprüche 1 bis 13, **dadurch gekennzeichnet, dass** sie die einzelnen Komponenten in folgenden Mengenbereichen enthält, angegeben in Gew.-% bezogen auf die gesamte Masse:
a) Epoxid-Prepolymer: 10 - 65 %, vorzugsweise 20 - 60 %
b) hitzeaktivierbarer Härter für das Präpolymer: 1 bis 10 %, vorzugsweise 2 - 8 %
c) Treibmittel: 0,5 bis 10 %, vorzugsweise 1 bis 5 %
d) thermoplastisches Polyurethan: 1 bis 50 %, vorzugsweise 5 bis 35 %
e) Block-Copolymer: 1 - 50 %, vorzugsweise 5 bis 30 %
f) Kautschuk-Partikel 0 - 40 %, vorzugsweise mindestens 5 und höchstens 25 %
g) anorganische Partikel, die eine Hülle aus organischen Polymeren aufweisen: 0 - 40 %, vorzugsweise mindestens 5 und höchstens 25 %
h) Füllstoffe 0 - 50 %, vorzugsweise mindestens 5 und höchstens 30 %.

15. Verwendung einer thermisch expandier- und härtbare Masse nach einem der Ansprüche 1 bis 14 zur Versteifung oder Verstärkung von Bauteilen.

## Claims

1. A thermally expandable and curable compound, containing
a) at least one epoxide prepolymer,
b) at least one heat-activatable hardener for the prepolymer,
c) at least one blowing agent,
d) at least one thermoplastic polyurethane,
e) at least one block copolymer.

2. The thermally expandable and curable compound according to Claim 1, **characterised in that** it additionally contains rubber particles.

3. The thermally expandable and curable compound according to Claim 2, **characterised in that** the rubber particles have a core-shell structure.

4. The thermally expandable and curable compound according to Claim 1, **characterised in that** it additionally contains inorganic particles having a shell of organic polymers.

5. The thermally expandable and curable compound according to any one of Claims 1 to 4, **characterised in that** a thermoplastic non-reactive polyurethane selected from polyurethanes having a polyester chain is used as component d).

6. The thermally expandable and curable compound according to Claim 5, **characterised in that** the thermoplastic polyurethane d) is solid at 22°C and has a glass transition temperature below -20°C, preferably below - 30°C.

7. The thermally expandable and curable compound according to at least one of Claims 5 and 6, **characterised in that** the thermoplastic polyurethane d) is solid at 22°C and has a melting range or a softening range according to Kofler beginning above 100°C, preferably above 115°C.

8. The thermally expandable and curable compound according to any one or more of Claims 5 to 7, **characterised in that** the thermoplastic polyurethane d) is solid at 22°C and, as a pure substance, has an elongation at break of at least 300%, preferably at least 400%.

9. The thermally expandable and curable compound according to any one or more of Claims 5 to 8, **characterised in that** the thermoplastic polyurethane d) has a number-average molecular weight in the range of 50,000 g/mol to 120,000 g/mol.

10. The thermally expandable and curable compound according to any one of Claims 1 to 9, **characterised in that** the block copolymer (e) is selected from those having a first polymer block with a glass transition temperature below 15°C and a second polymer block with a glass transition temperature above 25°C.

11. The thermally expandable and curable compound according to Claim 10, **characterised in that** the block copolymer (e) is selected from those in which a first polymer block is selected from a polybutadiene block or a polyisoprene block and a second polymer block is selected from a polystyrene block or a polymethyl methacrylate block.

12. The thermally expandable and curable compound according to any one of Claims 1 to 10, **characterised in that** the block copolymer (e) is selected from copolymers with the following block structure: styrenebutadiene-(meth)acrylate, styrene-butadiene-(meth)acrylic acid ester, ethylene-(meth)acrylic acid ester-glycidyl (meth)acrylic acid ester, ethylene-(meth)acrylic acid ester-maleic acid anhydride, methyl methacrylate-butyl acrylate-methyl methacrylate.

13. The thermally expandable and curable compound according to any one of Claims 1 to 12, **characterised in that** it additionally contains one or more fillers selected from the group comprising fibers, mineral fillers and light fillers.

14. The thermally expandable and curable compound according to any one of Claims 1 to 13, **characterised in that** it contains the individual components in the following quantity ranges, given in wt%, based on the total compound:
a) epoxide prepolymer: 10-65% preferably 20-60%,
b) heat-activatable hardener for the prepolymer: 1% to 10%, preferably 2% to 8%,
c) blowing agent: 0.5% to 10%, preferable 1% to 5%,
d) thermoplastic polyurethane : 1% to 50%, preferably 5% to 35%,
e) block copolymer: 1-50%, preferably 5% to 30%,
f) rubber particles: 0-40%, preferably at least 5% and at most 25%,
g) inorganic particles having a shell of organic polymers: 0-40%, preferably at least 5% and at most 25%,
h) fillers: 0-50%, preferably at least 5% and at most 30%.

15. The use of a thermally expandable and curable compound according to any one of Claims 1 to 14 for stiffening or reinforcement of building components.

## Revendications

1. Matière expansible et durcissable par voie thermique contenant :
a) au moins un prépolymère d'époxyde ;
b) au moins un durcisseur activable à la chaleur pour le prépolymère ;
c) au moins un agent moussant ;
d) au moins un polyuréthane thermoplastique;
e) au moins un copolymère séquencé.

2. Matière expansible et durcissable par voie thermique selon la revendication % **caractérisée en ce qu'**elle contient en outre des particules de caoutchouc.

3. Matière expansible et durcissable par voie thermique selon la revendication 2, **caractérisée en ce que** les particules de caoutchouc présentent une structure du type noyau-enveloppe.

4. Matière expansible et durcissable par voie thermique selon la revendication 1, **caractérisée en ce qu'**elle contient en outre des particules inorganiques, qui présentent une enveloppe à base de polymères organiques.

5. Matière expansible et durcissable par voie thermique selon l'une quelconque des revendications 1 à 4, **caractérisée en ce qu'**on utilise, à titre de composant d), un polyuréthane thermoplastique non réactif, qui est choisi parmi des polyuréthanes qui contiennent une chaîne de polyester.

6. Matière expansible et durcissable par voie thermique selon la revendication 5, **caractérisée en ce que** le polyuréthane thermoplastique d) est solide à 22 °C et présente une température de transition vitreuse inférieure à -20 °C, de préférence inférieure à -30 °C.

7. Matière expansible et durcissable par voie thermique selon au moins une des revendications 5 et 6, **caractérisée en ce que** le polyuréthane thermoplastique d) est solide à 22 °C et présente un domaine de fusion ou un domaine de ramollissement d'après Kofler qui commence au-dessus de 100 °C, de préférence au-dessus de 115 °C.

8. Matière expansible et durcissable par voie thermique selon une ou plusieurs des revendications 5 à 7, **caractérisée en ce que** le polyuréthanne thermoplastique d) est solide à 22 °C et présente, sous la forme d'une substance pure, un allongement à la rupture d'au moins de 300 %, de préférence d'au moins 400 %.

9. Matière expansible et durcissable par voie thermique selon une ou plusieurs des revendications 5 à 8, **caractérisée en ce que** le polyuréthane thermoplastique d) présente une masse molaire moyenne en nombre dans la plage de 50.000 g/mol à 120.000 g/mol.

10. Matière expansible et durcissable par voie thermique selon l'une quelconque des revendications 1 à à 9, **caractérisée en ce que** le copolymère séquencé (e) est choisi parmi ceux qui contiennent une première séquence polymère dont la température de transition vitreuse est inférieure à 15 °C et une deuxième séquence polymère dont la température de transition vitreuse est supérieure à 25 °C.

11. Matière expansible et durcissable par voie thermique selon la revendication 10, **caractérisée en ce que** le copolymère séquencé (e) est choisi parmi ceux dont une première séquence polymère est choisie parmi une séquence de polybutadiène ou de polyisoprène et dont une deuxième séquence polymère est choisie parmi une séquence de polystyrène ou une séquence de polyméthacrylate de méthyle.

12. Matière expansible et durcissable par voie thermique selon l'une quelconque des revendications 1 à 10, **caractérisée en ce que** le copolymère séquencé (e) est choisi parmi des copolymères possédant la structure de séquences suivante : styrène-butadiène-(méth)acrylate, styrène-butadiène-ester de l'acide (méth)acrylique, éthylène-ester de l'acide (méth)acrylique-ester glycidylique de l'acide (méth)acrylique, éthylène-ester de l'acide (méth)acrylique-anhydride l'acide maléique, méthacrylate de méthyle-acrylate de butyle-méthacrylate de méthyle.

13. Matière expansible et durcissable par voie thermique selon l'une quelconque des revendications 1 à 12, **caractérisée en ce qu'**elle contient en outre une ou plusieurs matières de charge choisies parmi le groupe comprenant: des fibres, des matières de charge minérales et des matières de charge légères.

14. Matière expansible et durcissable par voie thermique selon l'une quelconque des revendications 1 à 13, **caractérisée en ce qu'**elle contient les composants individuels dans les plages quantitatives suivantes indiquées en pour cent en poids par rapport à la masse totale:
a) prépolymère d'époxyde: de 10 à 65 %, de préférence de 20 à 60 %;
b) durcisseur pour le prépolymère, activable à la chaleur: de 1 à 10 %, de préférence de 2 à 8 % ;
c) agent moussant : de 0,5 à 10 %, de préférence de 1 à 5 % ;
d) polyuréthane thermoplastique : de 1 à 50 %, de préférence de 5 à 35 % ;
e) copolymère séquencé : de 1 à 50 %, de préférence de 5 à 30 % ;
f) particules de caoutchouc: de 0 à 40 %, de préférence au moins 5 et au maximum 25 % ;
g) particules inorganiques qui présentent une enveloppe à base de polymères organiques: de 0 à 40 %, de préférence au moins 5 et au maximum 25 % ;
h) matières de charge: de 0 à 50 %, de préférence au moins 5 et au maximum 30 %.

15. Utilisation d'une matière expansible et durcissable par voie thermique selon l'une quelconque des revendications 1 à 14 pour la rigidification et le renforcement de composants de construction.
